(19) Europäisches Patentamt
European Patent Office
Office européen des brevets

(11) **EP 3 311 641 B1**

(12) **EUROPÄISCHE PATENTSCHRIFT**

(45) Veröffentlichungstag und Bekanntmachung des Hinweises auf die Patenterteilung:
**08.07.2020 Patentblatt 2020/28**

(51) Int Cl.:
*A01B 63/111* *(2006.01)*     *A01B 63/114* *(2006.01)*
*A01B 63/10* *(2006.01)*

(21) Anmeldenummer: **17196122.0**

(22) Anmeldetag: **12.10.2017**

(54) **STEUERVORRICHTUNG FÜR EINE ZUGMASCHINE, ZUGMASCHINE MIT EINER STEUERVORRICHTUNG UND VERFAHREN ZUM STEUERN EINER ZUGMASCHINE**

CONTROL DEVICE FOR A TRACTOR, TRACTOR PROVIDED WITH A CONTROL DEVICE AND METHOD OF CONTROLLING A TRACTOR

DISPOSITIF DE COMMANDE POUR UN ENGIN MOTEUR, ENGIN MOTEUR DOTÉ D'UN DISPOSITIF DE COMMANDE ET PROCÉDÉ DE COMMANDE D'UN ENGIN MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2016 DE 102016220489**

(43) Veröffentlichungstag der Anmeldung:
**25.04.2018 Patentblatt 2018/17**

(73) Patentinhaber: **Robert Bosch GmbH**
**70442 Stuttgart (DE)**

(72) Erfinder: **Schleyer, Markus**
**71640 Ludwigsburg (DE)**

(56) Entgegenhaltungen:
**EP-A1- 3 146 822     DE-A1- 1 557 862**
**DE-A1- 3 501 568     DE-A1- 10 140 383**
**DE-B- 1 237 831       JP-A- H09 224 409**

EP 3 311 641 B1

**Beschreibung**

Gebiet der Erfindung

Die Erfindung betrifft eine Steuervorrichtung für eine Zugmaschine gemäß dem Oberbegriff des Patentanspruchs 1. Weiter betrifft die Erfindung eine Zugmaschine mit der Steuervorrichtung und ein Verfahren zum Steuern der Zugmaschine.

Hintergrund der Erfindung

Es ist bekannt, eine Zugmaschine, beispielsweise einen Traktor, mit einem Hubwerk auszurüsten, mit dem ein oder mehrere Anbaugeräte wie beispielsweise ein Pflug oder ein Grubber koppelbar sind. Ein derartiges Hubwerk ist meist als ein Drei-Punkt-Kraftheber mit beispielsweise zwei Unterlenkern und einem Oberlenker ausgebildet. Mittels einer heute üblichen elektrohydraulischen Hubwerksregelung (EHR) ist über eine Veränderung einer Höhe der Unterlenker und/oder einer Länge des Oberlenkers eine Neigung und/oder einer Höhe des Hubwerks und somit eine Neigung und/oder einer Höhe des oder der mit dem Hubwerk gekoppelten Anbaugeräte einstellbar, insbesondere um eine möglichst gleichmäßige Höhe des oder der Anbaugeräte in Bezug auf einen Untergrund, über den das oder die Anbaugeräte gezogen werden, einzuhalten. Insbesondere beim Pflügen führt dies vorteilhafterweise zu einer gleichmäßigen Pflugtiefe und einem wünschenswert gleichmäßigen Pflugbild.

Die Hubwerksregelung kann zugkraftabhängig oder lageabhängig regeln. Auch eine Mischung aus beiden Regelungsarten ist möglich. Bei einer Kraftregelung wird die Zugkraft an den Gestängen als Parameter für die Regelung erfasst. Dabei ergibt eine gleichbleibende Zugkraft eine etwa gleichmäßige Höhe des Anbaugeräts und somit eine gleichmäßige Pflugtiefe. Als Sensoren werden dabei üblicherweise Kraftmessbolzen an den Unterlenkern und/oder dem Oberlenker eingesetzt. Bei einer Lageregelung wird das Hubwerk nach seiner Höhenänderung in Bezug auf den Traktor gesteuert und somit wird das Anbaugerät auf einer bestimmten Höhe gehalten. Dazu ist üblicherweise ein Sensor vorne und ein Sensor hinten an dem jeweiligen Arbeitsgerät erforderlich, um den jeweiligen Abstand des Anbaugeräts zum Untergrund zu erfassen. Insbesondere verfügen derzeitig verfügbare Systeme nur über die beschriebene relative Lageregelung; eine absolute Lageregelung kann alternativ oder zusätzlich dazu möglich sein.

Nachteilig dabei ist, dass einerseits die Kraftmessbolzen teuer sind und andererseits, dass die Sensoren für den Abstand zum Untergrund an dem jeweiligen Anbaugerät installiert und mit dem Traktor - meist über Kabel - verbunden werden müssen, was teuer und aufwändig ist. Wenn aus Kostengründen für mehrere Anbaugeräte nur ein einzelnes Sensorpaar zum Erfassen des Abstands zum Untergrund vorhanden ist, muss dieses aufwändig von dem vorher eingesetzten Anbaugerät abgebaut und an das dann an der Zugmaschine zum Einsatz kommende Anbaugerät angebaut und gegebenenfalls noch darauf abgestimmt werden.

In DE 101 40 383 A1 ist eine Steuerung oder Regelung der Lage eines an einem Schlepper angebauten Anbaugerätes offenbart, die die Neigung des Schleppers relativ zu einer horizontalen Ebene bestimmt und in Abhängigkeit der Neigung und einer weiteren Größe das Hubwerk steuert.

In DE 1557862 ist eine automatische Tiefenregelung von Bodenbearbeitungsgeräten, die mittels Dreipunktgestänge mit einem Traktor gekoppelt sind offenbart, die auf einer Druckpendelsteuerung basiert.

Des Weiteren sind in EP 3 146 822 A1 eine Vorrichtung und ein Verfahren zur Regelung des Betriebs eines hydraulisch betätigbaren Schleppgeräts an einem Fahrzeug offenbart, die auf der Bestimmung eines Antriebschlupfes basieren.

In DE 1 237 831 wird eine Steuerung einer Bodenbearbeitungsgerätes offenbart, die die Krümmung der Bodenoberfläche als Führungsgröße für die Höhenverstellung nutzt.

Des Weiteren ist in JP H09 224409 A ein elektronischer Regelkreis offenbart, der die Tiefe eines Pfluges steuert.

In DE 35 01 568 A1 ist eine Regelung offenbart, die eine Absolutbewegung des Anbaugeräts zu dem Boden als Regelgröße heranzieht.

Offenbarung der Erfindung

Demgegenüber liegt der Erfindung die Aufgabe zugrunde, eine einfachere und/oder kostengünstigere Steuervorrichtung für eine Zugmaschine zum Ziehen mindestens eines Anbaugeräts zur Verfügung zu stellen. Weiter ist es eine Aufgabe der vorliegenden Erfindung, eine Zugmaschine mit einer derartigen einfacheren und/oder kostengünstigeren Steuervorrichtung, und ein Verfahren zum Steuern einer derartigen Zugmaschine zu schaffen.

Die Aufgabe bezüglich der Steuervorrichtung wird mit den Merkmalen des Patentanspruches 1 gelöst, wobei die Aufgabe hinsichtlich der Zugmaschine mit den Merkmalen des dem Patentanspruch 1 nebengeordneten Patentanspruchs gelöst wird und die Aufgabe bezüglich des Verfahrens wird mit den Merkmalen des unabhängigen Verfahrensanspruchs gelöst.

Vorteilhafte Weiterbildungen der Erfindung sind Gegenstand der Unteransprüche.

Nachfolgend vereinfachend als eine Einstellung einer Neigung und/oder einer Höhe eines Hubwerks einer Zugmaschine und somit als eine Einstellung einer Neigung und/oder einer Höhe des oder der mit dem Hubwerk gekoppelten Anbaugeräte bezeichnet ist eine, insbesondere über eine Veränderung einer Höhe von Unterlenkern und/oder einer Länge eines Oberlenkers des Hubwerks erreichte, Einstellung des Hubwerks, mittels der die Neigung und/oder Höhe des mindestens einen Anbaugeräts einstellbar ist.

Eine Steuervorrichtung für eine Zugmaschine zum Ziehen mindestens eines Anbaugeräts über einen Untergrund weist eine Sensoreinrichtung auf, mittels der eine Lageänderungsrate der Zugmaschine erfassbar ist. Ein Ziehen des Anbaugeräts im Sinne der vorliegenden Erfindung schließt ein Schieben eines, insbesondere vorne an der Zugmaschine angebrachten, Anbaugeräts mit ein; vereinfachend ist nachfolgend nur vom Ziehen des Anbaugeräts die Rede.

Ein Vorteil der erfindungsgemäßen Steuervorrichtung ist, dass damit die Lageänderungsrate der Zugmaschine erfassbar ist und zur Einstellung der Neigung und/oder der Höhe des Hubwerks und somit zur Einstellung der Neigung und/oder der Höhe des mindestens einen mit dem Hubwerk gekoppelten Anbaugeräts verwendbar ist. Es muss also nicht mehr aufwändig und/oder teuer wie oben beschrieben eine Zugkraftmessung und/oder eine Lageregelung des mindestens einen Anbaugeräts über jeweils dafür notwendige Sensoren erfolgen, womit die damit verbundenen oben beschriebene Nachteile vermieden sind.

Vorteilhafterweise ist mittels der Steuervorrichtung die Höhe und/oder die Neigung des mindestens einen Anbaugeräts, insbesondere jeweils in Bezug auf den Untergrund, in Abhängigkeit der von der Sensoreinrichtung erfassten Lageänderungsrate der Zugmaschine einstellbar. Somit sind Veränderungen einer Lage der Zugmaschine beim Ziehen des Anbaugeräts, die Einfluss auf die Höhe und/oder die Neigung des Anbaugeräts haben, ausgleichbar, beispielsweise beim Befahren von Unebenheiten des Untergrunds.

Vorteilhafterweise enthält die Lageänderungsrate eine Drehrate der Zugmaschine. Somit ist eine Lageänderung der Zugmaschine von der Steuervorrichtung schnell erfassbar und auswertbar.
Insbesondere enthält die Drehrate eine Nick-Drehrate der Zugmaschine um eine Querachse der Zugmaschine.

Somit ist eine Lageänderung der Zugmaschine um ihre Querachse, wie sie beim Befahren eines unebenen Untergrunds vorkommt und die einen großen Einfluss auf die Neigung und/oder die Höhe des Hubwerks in Bezug auf den Untergrund und somit auf die Neigung und/oder die Höhe des mindestens einen mit dem Hubwerk gekoppelten Anbaugeräts in Bezug auf den Untergrund hat, schnell erfassbar und von der Steuervorrichtung auswertbar.

Beispielsweise kann die Drehrate, insbesondere zusätzlich zu der Nick-Drehrate, eine Roll-Drehrate der Zugmaschine um eine Längsachse der Zugmaschine enthalten. Somit kann eine Lageänderung der Zugmaschine um ihre Längsachse, wie sie beim Befahren eines unebenen Untergrunds ebenso vorkommen kann und die ebenso einen Einfluss auf die Neigung und/oder die Höhe des Hubwerks in Bezug auf den Untergrund und somit auf die Neigung und/oder die Höhe des mindestens einen mit dem Hubwerk gekoppelten Anbaugeräts in Bezug auf den Untergrund haben kann, schnell erfasst und von der Steuervorrichtung ausgewertet werden.

Die Längsachse der Zugmaschine ist parallel zu einer Geradeausfahrrichtung der Zugmaschine ausgerichtet und verläuft vorzugsweise durch einen Flächenschwerpunkt oder Massenschwerpunkt der Zugmaschine oder durch eine Mitte der Längenausdehnung der Zugmaschine in deren Querrichtung. Die Querachse ist senkrecht zu der Längsachse ausgerichtet und verläuft ebenso vorzugsweise durch den Flächenschwerpunkt oder Massenschwerpunkt der Zugmaschine oder durch eine Mitte der Längenausdehnung der Zugmaschine in deren Längsrichtung, wobei die Querachse vorzugsweise senkrecht auf einer Hochachse der Zugmaschine steht. Die Hochachse ist bei sich auf ebenem Untergrund befindlicher Zugmaschine im Wesentlichen parallel zu einer Schwerkraftrichtung ausgerichtet und verläuft vorzugsweise durch einen Flächenschwerpunkt oder Massenschwerpunkt der Zugmaschine, oder durch die Mitte der Längenausdehnung der Zugmaschine in deren Längsrichtung und durch die Mitte der Längenausdehnung der Zugmaschine in deren Querrichtung.

Insbesondere ist die Neigung des mindestens einen mit einem Hubwerk der Zugmaschine gekoppelten Anbaugeräts über eine Länge eines längenverstellbaren Oberlenkers des Hubwerks, und/oder eine Verschwenkung mindestens eines Unterlenkers und/oder eines Oberlenkers des Hubwerks einstellbar. Somit ist eine einfache und wirksame Einstellbarkeit der Neigung des mindestens einen Anbaugeräts gegeben.

Vorteilhafterweise ist die Länge des längenverstellbaren Oberlenkers, und/oder die Verschwenkung des mindestens einen Unterlenkers und/oder des Oberlenkers mittels eines jeweils zugeordneten und von der Steuervorrichtung steuerbaren Hydraulikzylinders einstellbar. Somit ist die einfache und wirksame Einstellbarkeit der Neigung des mindestens einen Anbaugeräts mit einfachen Mitteln umgesetzt, deren Technik leicht handhabbar ist. Beispielsweise kann das Hubwerk als Drei-Punkt-Kraftheber mit einem Oberlenker und zwei Unterlenkern ausgebildet sein. Insbesondere ist dabei die Höhe des Anbaugeräts über eine gemeinsame Verschwenkung der Unterlenker einstellbar.

Vorteilhafterweise kann die Länge des längenverstellbaren Oberlenkers derart verstellt sein/werden, dass die Neigung des Anbaugeräts während der Höhenverstellung gleich bleibt oder verändert ist/wird. Somit ist auf einfache Art und Weise eine effektive und anpassbare Einstellung der Neigung und/oder der Höhe des mindestens einen Anbaugeräts verwirklicht.

Insbesondere ist mittels der Sensoreinrichtung eine Neigung einer Längsachse der Zugmaschine und/oder eine Neigung einer Querachse der Zugmaschine und/oder eine Neigung der Hochachse der Zugmaschine jeweils in Bezug auf den Untergrund erfassbar. Somit ist eine Einstellung der Neigung und/oder der Höhe des Anbaugeräts, insbesondere in Bezug auf den von der Zugmaschine befahrenen Untergrund, verbesserbar. Die Neigung in Bezug auf den Untergrund schließt alternativ oder zusätzlich dazu die Neigung in Bezug auf einen Gravitationsvektor mit ein; nachfolgend ist vereinfachend nur von der Neigung in Bezug auf den Untergrund die Rede.

Insbesondere ist bei Berücksichtigung der Neigung der Querachse der Zugmaschine und/oder der Neigung der Hochachse der Zugmaschine in deren Querrichtung bei der Einstellung der Neigung und/oder der Höhe des Anbaugeräts eine von der Steuervorrichtung steuerbare Verdreheinrichtung für das Hubwerk und/oder das Anbaugerät vorgesehen. Vorteilhafterweise ist das Hubwerk und/oder das Anbaugerät mittels der Verdreheinrichtung etwa um die Längsachse der Zugmaschine verdrehbar.

Die Sensoreinrichtung enthält einen Trägheitssensor für eine Drehrate. Somit ist eine Drehrate der Zugmaschine auf einfache und kostengünstige Art und Weise erfassbar.

Ergänzend dazu kann die Sensoreinrichtung einen Neigungssensor zum Erfassen der Neigung der Längsachse und/oder der Neigung der Querachse und/oder der Neigung der Hochachse der Zugmaschine enthalten.

Eine Zugmaschine zum Ziehen mindestens eines Anbaugeräts über einen Untergrund weist eine Steuervorrichtung nach einem der vorhergehenden Aspekte der Erfindung auf.

Ein Vorteil der erfindungsgemäßen Zugmaschine ist, dass mittels der Steuervorrichtung gemäß der vorliegenden Erfindung die Lageänderungsrate der Zugmaschine erfassbar ist und zur Einstellung der Neigung und/oder der Höhe eines Hubwerks und somit zur Einstellung der Neigung und/oder der Höhe des mindestens einen mit dem Hubwerk gekoppelten Anbaugeräts verwendbar ist. Ein Vorsehen von oben genannten teuren Kraftmessbolzen zum Erfassen einer Zugkraft für die ansonsten übliche Kraftregelung und/oder ein Vorsehen von Sensoren zum Erfassen eines Abstands des Anbaugeräts zum Untergrund je Anbaugerät kann somit entfallen, was wie oben beschrieben die Einstellung der Neigung und/oder der Höhe des Hubwerks und somit der Neigung und/oder der Höhe des mindestens einen Anbaugeräts vereinfacht und kostengünstiger macht. Vorteilhafterweise weist die Zugmaschine ein von der Steuervorrichtung steuerbares Hubwerk mit einem, insbesondere längenverstellbaren und verschwenkbaren, Oberlenker und mindestens einem, insbesondere verschwenkbaren, Unterlenker auf, womit eine Höhe und/oder eine Neigung des Anbaugeräts, insbesondere jeweils in Bezug auf den Untergrund, einstellbar ist.

Beispielsweise ist das Hubwerk in Form eines Drei-Punkt-Krafthebers mit zwei Unterlenkern und einem Oberlenker ausgebildet, wie oben beschrieben.

Vorteilhafterweise ist eine Sensoreinrichtung der Steuervorrichtung etwa in Längsrichtung und/oder in Querrichtung der Zugmaschine gesehen etwa in der Mitte der Zugmaschine angeordnet. Beispielsweise kann die Sensoreinrichtung etwa an einem Schnittpunkt angeordnet sein, an dem sich die oben beschriebene Längsachse und Querachse schneiden. Somit ist ein Einfluss einer Beschleunigung, insbesondere einer Drehbeschleunigung, auf ein Erfassungsergebnis der Sensoreinrichtung reduziert wenn nicht gar eliminiert. Soll die Beschleunigung, insbesondere die Drehbeschleunigung, mit berücksichtigt sein, kann alternativ oder zusätzlich eine Sensoreinrichtung außerhalb der Mitte der Zugmaschine vorgesehen sein.

Ein Verfahren zum Steuern einer Zugmaschine weist folgende Schritte auf:

Erfassen einer Lageänderungsrate der Zugmaschine, wobei die Lageänderungsrate eine Drehrate der Zugmaschine enthält und die Sensoreinrichtung einen Trägheitssensor für die Drehrate enthält, und

Einstellen einer Neigung und/oder einer Höhe mindestens eines von der Zugmaschine über einen Untergrund gezogenen Anbaugeräts, insbesondere jeweils in Bezug auf den Untergrund, in Abhängigkeit der erfassten Lageänderungsrate.

Ein Vorteil des erfindungsgemäßen Verfahrens ist, dass damit die Lageänderungsrate der Zugmaschine erfasst werden kann und zur Einstellung der Neigung und/oder der Höhe des Hubwerks und somit zur Einstellung der Neigung und/oder der Höhe des mindestens einen mit dem Hubwerk gekoppelten Anbaugeräts verwendet werden kann. Ein Berechnen der Lageänderungsrate aus unterschiedlichen Messwerten, die zuvor erfasst werden müssten, kann entfallen. Ebenso muss, insbesondere zum Erreichen einer in Bezug auf den Untergrund etwa gleichmäßigen Höhe des Anbaugeräts, nicht mehr aufwändig und/oder teuer wie oben beschrieben eine Zugkraftmessung über dafür notwendige Sensoren zur Kraftregelung des mindestens einen Anbaugeräts erfolgen, was mit den oben beschriebenen Nachteilen verbunden ist.

Das erfindungsgemäße Verfahren zum Steuern einer Zugmaschine kann insbesondere folgende Schritte aufweisen:

Eingeben der erfassten Lageänderungsrate in eine lageänderungsratenbasierte Vorsteuerung als Eingangsgröße,

Eingeben einer Sollposition der Neigung und/oder der Höhe des Hubwerks und somit einer Sollposition der Neigung und/oder der Höhe des Anbaugeräts und einer Istposition der Neigung und/oder der Höhe des Hubwerks und somit einer Istposition der Neigung und/oder der Höhe des Anbaugeräts als Eingangsgrößen in einen Lageregler für eine Lageregelung der Neigung und/oder der Höhe des Anbaugeräts, und

Einstellen der Neigung und/oder der Höhe des Hubwerks und somit des Anbaugeräts entsprechend der Ausgangsgrößen der lageänderungsratenbasierten Vorsteuerung und des Lagereglers.

Somit kann insbesondere bei einer ausgeführten Lageregelung für eine Regelung der Neigung und/oder Höhe und des Anbaugeräts die lageänderungsratenbasierte Vorsteuerung ausgeführt werden. Dies ist insbesondere bei derartigen Unebenheiten des Untergrunds von Vorteil, die zu einem, insbesondere vollständigen, Ausheben des Anbaugeräts führen können, wenn eine reine Lageregelung ausgeführt wird. Durch Ausführen der Lageregelung mit der lageänderungsratenbasierten Vorsteuerung lässt sich ein derartiger gewünschter Effekt erzielen, dass mittels einer Bodenbearbeitung die vorkommenden Unebenheiten möglichst verringert und/oder eingeebnet werden. Dies war bisher nur mittels einer Kraftregelung möglich, die das Ausheben mittels Beibehalten einer etwa konstanten Zugkraft und damit einer etwa konstanten Pflugtiefe verhindert. Die Kraftregelung ist aber mit den oben beschriebenen Nachteilen wie insbesondere dem Einsatz von teuren Kraftmessbolzen verbunden.

Zusätzlich dazu kann bei einer ausgeführten Lageregelung für eine Regelung der Neigung und/oder Höhe und des Anbaugeräts eine lageänderungsdatenbasierte Vorsteuerung mit einer Schlupfregelung ausgeführt werden. Bei der Schlupfregelung wird eine Fahrzeuggeschwindigkeit über Grund beispielsweise mittels eines Radarsensors erfasst, oder beispielsweise mittels einer mittels mindestens einem Radsensor erfassten Drehzahl mindestens eines Fahrzeugrades und/oder einer Getriebeausgangswelle des Fahrzeugs. Aus der Fahrzeuggeschwindigkeit wird ein Schlupf an mindestens einem Fahrzeugrad berechnet. Somit kann bei steigendem Schlupf, der auf eine erhöhte Zugkraft und somit auf eine erhöhte Gefahr eines Steckenbleiben des Anbaugeräts und/oder des Fahrzeugs schließen lässt, die Neigung und/oder die Höhe des Anbaugeräts derart eingestellt werden, dass der Schlupf kleiner wird; beispielsweise wird das Anbaugerät zumindest teilweise angehoben.

Kurze Beschreibung der Zeichnungen

Bevorzugte Ausführungsbeispiele der Erfindung werden im Folgenden anhand schematischer Zeichnungen näher erläutert. Es zeigen:

Fig. 1 eine schematische Seitenansicht einer erfindungsgemäßen Zugmaschine mit einem mit seinem Hubwerk gekoppelten Anbaugerät;

Fig. 2 eine schematische Darstellung der Zugmaschine aus Fig. 1 beim Ziehen des Anbaugeräts über einen unebenen Untergrund;

Fig. 3 ein Schema einer Regelungsstrategie mit der erfindungsgemäßen Steuervorrichtung; und

Fig. 4 einen Ablaufplan eines erfindungsgemäßen Verfahrens gemäß einem Ausführungsbeispiel.

Detaillierte Beschreibung der bevorzugten Ausführungsformen

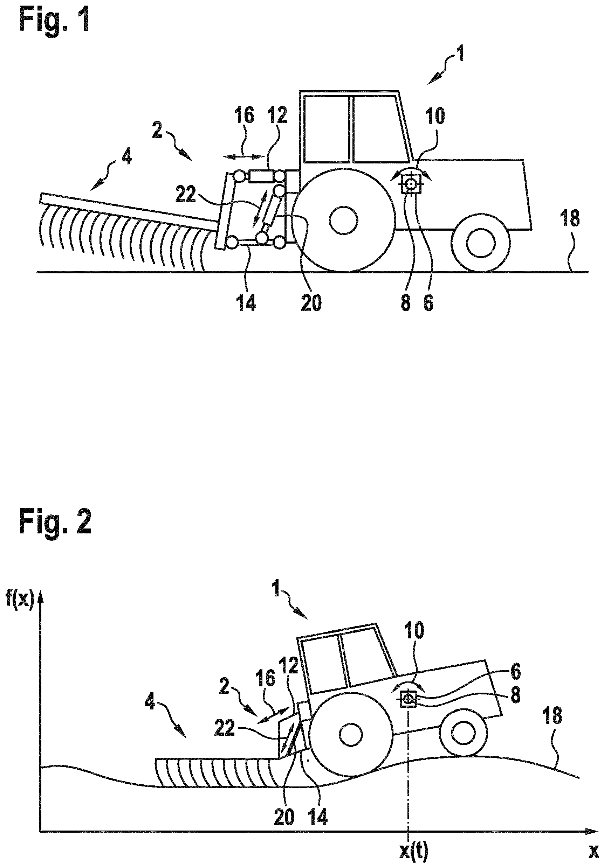

In Fig. 1 ist eine Zugmaschine 1, hier ein Traktor, mit einem an seinem Hubwerk 2 gekoppelten Anbaugerät 4, hier ein Pflug, in einer schematisierten Seitenansicht dargestellt.

Die Zugmaschine 1 weist eine Sensoreinrichtung 6 einer erfindungsgemäßen Steuervorrichtung 7 auf, die - jeweils in Längsrichtung und in Querrichtung der Zugmaschine 1 gesehen - etwa in der Mitte der Zugmaschine 1 angeordnet ist. Die Sensoreinrichtung 6 ist hier als ein Trägheitssensor für Drehraten ausgebildet.

Wegen der hier gewählten Anbringungsart ist mittels des Trägheitssensors 6 eine Drehrate der Zugmaschine 1 in einem beliebigen Drehsinn um deren Querachse 8, also eine Nick-Drehrate der Zugmaschine 1, erfassbar, kenntlich gemacht mit einem doppelseitigen Drehratenpfeil 10. Die Querachse 8 ist in dieser Darstellung senkrecht zur Zeichenebene ausgerichtet und verläuft etwa durch die Mitte der Zugmaschine 1.

Bei einer alternativ oder ergänzend dazu möglichen Anbringungsart des Trägheitssensors 6 /eines weiteren Trägheitssensors (nicht dargestellt) kann eine Drehrate der Zugmaschine 1 in einem beliebigen Drehsinn um deren Längsachse (nicht dargestellt) erfasst werden, also eine Roll-Drehrate.

Das Hubwerk 2 ist hier als ein Drei-Punkt-Kraftheber ausgebildet und hat einen Oberlenker 12 und zwei Unterlenker 14, von denen in der Seitenansicht nur einer sichtbar ist. Der Oberlenker 12 ist, hier mittels eines doppelseitigen Längenpfeils 16 dargestellt, in seiner Länge verstellbar, um eine Neigung des Anbaugeräts 4 in Bezug auf einen hier ebenen Untergrund 18 einzustellen, und ist hier als ein Hydraulikzylinder ausgebildet. Die Unterlenker 14 sind mittels eines jeweils zugeordneten Hydraulikzylinders 20 verschwenkbar, wodurch insbesondere mittels einer gemeinsamen Verschwenkung der Unterlenker 14 eine Höhe des Anbaugeräts 4 in Bezug auf den Untergrund 18 einstellbar ist, hier dargestellt mittels eines doppelseitigen Höhenpfeils 22. Dabei kann je nach Bedarf die Länge des längenverstellbaren Oberlenkers 12 derart verstellt sein/werden, dass die Neigung des Anbaugeräts 4 während der Höhenverstellung gleich bleibt oder verändert ist/wird.

In Fig. 2 ist die Zugmaschine 1 dargestellt, wie sie das Anbaugerät 4 über den hier unebenen Untergrund 18 zieht. Dabei ist der Untergrund 18 als eine Funktion f(x) dargestellt. Die Zugmaschine 1 befindet sich zu einer Zeit (t) an einem Punkt (x).

Daraus ist mathematisch ableitbar, dass sich die Nick-Drehrate der Zugmaschine 1 zumindest näherungsweise aus einer Neigung der Zugmaschine 1 und deren Geschwindigkeit ergibt.

Die Formel für die Nick-Drehrate lautet:

$$\mathbf{\frac{df\big(x(t)\big)}{dt}} \;=\; \frac{\partial f\big(x(t)\big)}{\partial x} \cdot \frac{dx(t)}{dt}$$

Nick-Drehrate = Neigung * Geschwindigkeit

Somit ist für eine effiziente Steuerung der Höhe und/oder der Neigung des Anbaugeräts 4 eine Erfassung der Drehrate der Zugmaschine 1, hier der Nick-Drehrate, ausreichend. Eine Erfassung von weiteren Größen wie beispielsweise einer konkreten Neigung oder Geschwindigkeit der Zugmaschine 1 ist mit der vorliegenden Erfindung grundsätzlich nicht notwendig und vereinfacht somit die Steuervorrichtung.

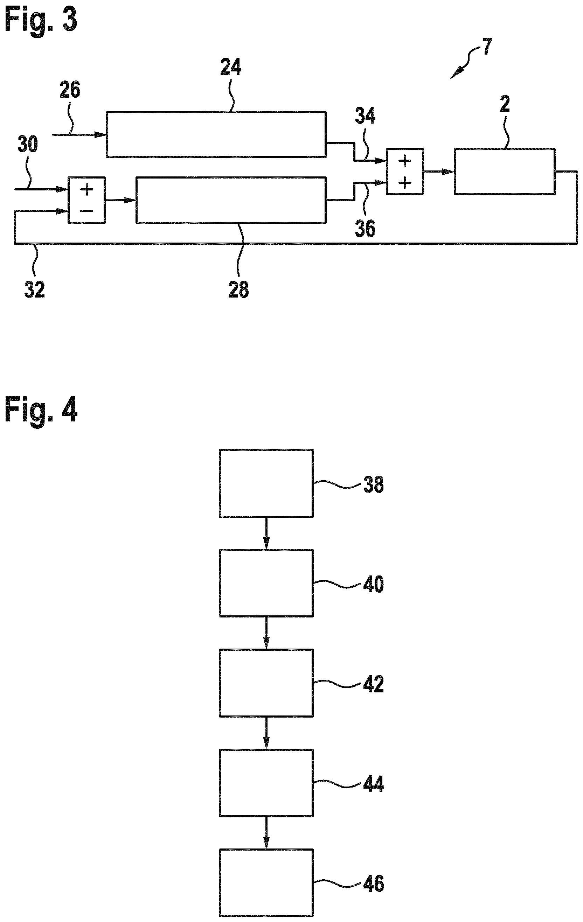

In Fig. 3 ist ein Schema einer Regelungsstrategie mit der erfindungsgemäßen Steuervorrichtung 7 zum Einstellen der Neigung und/oder Höhe des Hubwerks 2 und damit zum Einstellen der Neigung und/oder Höhe des mit dem Hubwerk 2 gekoppelten Anbaugeräts 4 dargestellt. Die erfindungsgemäße Steuervorrichtung 7 enthält hier eine Nick-Drehraten-basierte Vorsteuerung 24, der als Eingangsgröße 26 die mittels des Trägheitssensors 6 für Drehraten erfasste Nick-Drehrate der Zugmaschine 1 eingegeben wird.

Zusätzlich dazu enthält die erfindungsgemäße Steuervorrichtung 7 einen Lageregler 28 für eine Lageregelung der Neigung und/oder Höhe des Hubwerks 2 und damit der Neigung und/oder Höhe des mit dem Hubwerk 2 gekoppelten Anbaugeräts 4, dem als erste Eingangsgröße 30 eine Sollposition des Hubwerks 2 und damit eine Sollposition des mit dem Hubwerk 2 gekoppelten Anbaugeräts 4 eingegeben wird. Ebenso wird dem Lageregler 28 eine Istposition des Hubwerks 2 und damit des mit dem Hubwerk 2 gekoppelten Anbaugeräts 4 als zweite Eingangsgröße 32 eingegeben. Hier wird die Istposition von der Sollposition abgezogen.

Eine Ausgangsgröße 34 der Nick-Drehraten-basierten Vorsteuerung 24 und eine Ausgangsgröße 36 des Lagereglers 28 werden in der erfindungsgemäßen Steuervorrichtung 7 zusammen zum Einstellen der Neigung und/oder der Höhe des Hubwerks 2 und damit der Neigung und/oder der Höhe des mit dem Hubwerk 2 gekoppelten Anbaugeräts 4 verwendet. Hier werden die Ausgangsgröße 34 und die Ausgangsgröße 36 addiert.

In Fig. 4 ist ein Ablaufplan eines erfindungsgemäßen Verfahrens gemäß einem Ausführungsbeispiel dargestellt.

In einem Erfassungsschritt 38 wird einer Lageänderungsrate der Zugmaschine erfasst, beispielsweise mittels der als Trägheitssensor 6 für Drehraten ausgebildeten Sensoreinrichtung.

In einem ersten Eingabeschritt 40 wird die erfasste Lageänderungsrate in eine lageänderungsratenbasierte Vorsteuerung 24 als Eingangsgröße 26 eingegeben.

In einem zweiten Eingabeschritt 42 wird eine Sollposition der Neigung und/oder der Höhe des Anbaugeräts 4 in einen Lageregler 28 für eine Lageregelung der Neigung und/oder der Höhe des Anbaugeräts 4 als erste Eingangsgröße 30 eingegeben.

In einem dritten Eingabeschritt 44 wird eine Istposition der Neigung und/oder der Höhe des Hubwerks 2 und damit der Neigung und/oder der Höhe des mit dem Hubwerk 2 gekoppelten Anbaugeräts 4 als zweite Eingangsgröße 32 in den Lageregler 28 für eine Lageregelung der Neigung und/oder der Höhe des Anbaugeräts eingegeben.

In einem Einstellschritt 46 wird die Neigung und/oder die Höhe des Hubwerks 2 und damit die Neigung und/oder die Höhe des mit dem Hubwerk 2 gekoppelten Anbaugeräts 4 entsprechend der Ausgangsgrößen 34, 36 der lageänderungsratenbasierten Vorsteuerung 24 und des Lagereglers 28 eingestellt.

Vorteilhafterweise wird in dem Einstellschritt 46 die Neigung und/oder die Höhe des mindestens einen von der Zugmaschine 1 über den Untergrund 18 gezogenen Anbaugeräts 4 jeweils in Bezug auf den Untergrund 18 und in Abhängigkeit der erfassten Lageänderungsrate, insbesondere der erfassten Nick-Drehrate, eingestellt.

Offenbart ist eine Steuervorrichtung für eine Zugmaschine zum Ziehen mindestens eines Anbaugeräts über einen Untergrund, wobei eine Sensoreinrichtung vorgesehen ist, mittels der, insbesondere zum Einstellen einer Neigung und/oder einer Höhe des Anbaugeräts in Bezug auf den Untergrund, eine Lageänderungsrate der Zugmaschine erfassbar ist. Mit der vorliegenden Erfindung ist eine einfache und kostengünstige Steuervorrichtung geschaffen, um die Neigung und/oder die Höhe des Anbaugeräts relativ zu einer Unebenheit des Untergrunds einzustellen, da die Lageänderungsrate, die insbesondere eine Drehrate enthält, einfach und kostengünstig mittels eines Trägheitssensors für eine Drehrate erfassbar ist und direkt als Eingangsgröße für die Steuervorrichtung verwendbar ist.

Weiter offenbart sind eine Zugmaschine mit der erfindungsgemäßen Steuervorrichtung und ein Verfahren zum Steuern dieser Zugmaschine. Die Zugmaschine ist mit einem Hubwerk ausgerüstet, mit dem mindestens ein Anbaugerät koppelbar ist. Ein Einstellen der Neigung und/oder der Höhe des Hubwerks hat also direkten Einfluss auf die Neigung und/oder die Höhe des damit gekoppelten Anbaugeräts.

Weiter offenbart ist ein Verfahren zum Steuern der Zugmaschine, bei dem mittels Erfassen einer Lageänderungsrate, insbesondere einer Nick-Drehrate, der Zugmaschine auf einfache und kostengünstige Art und Weise die Neigung und/oder die Höhe des Anbaugeräts relativ zu einer Unebenheit des Untergrunds eingestellt wird, ohne aufwändig und teuer weitere Größen messen und/oder berechnen und in die Steuerung einfließen lassen zu müssen.

Bezugszeichen

| | |
|---|---|
| 1 | Zugmaschine |
| 2 | Hubwerk |
| 4 | Anbaugerät |
| 6 | Sensoreinrichtung / Trägheitssensor |
| 7 | Steuervorrichtung |
| 8 | Querachse |
| 10 | Drehratenpfeil |
| 12 | Oberlenker |
| 14 | Unterlenker |
| 16 | Längenpfeil |
| 18 | Untergrund |
| 20 | Hydraulikzylinder |
| 22 | Höhenpfeil |
| 24 | Nick-Drehraten-basierte Vorsteuerung |
| 26 | Eingangsgröße der Nick-Drehraten-basierten Vorsteuerung |
| 28 | Lageregler |
| 30 | erste Eingangsgröße des Lagereglers |
| 32 | zweite Eingangsgröße des Lagereglers |
| 34 | Ausgangsgröße der Nick-Drehraten-basierten Vorsteuerung |
| 36 | Ausgangsgröße des Lagereglers |
| 38 | Erfassungsschritt |
| 40 | erster Eingabeschritt |
| 42 | zweiter Eingabeschritt |
| 44 | dritter Eingabeschritt |
| 46 | Einstellschritt |

**Patentansprüche**

1. Steuervorrichtung für eine Zugmaschine (1) zum Ziehen mindestens eines Anbaugeräts (4) über einen Untergrund (18), die eine Sensoreinrichtung (6) aufweist, **dadurch gekennzeichnet, dass** die Steuervorrichtung eingerichtet ist mittels der Sensoreinrichtung (6) eine Lageänderungsrate der Zugmaschine (1), die eine Drehrate der Zugmaschine (1) enthält, zu erfassen, und die Sensoreinrichtung einen Trägheitssensor (6) für die Drehrate enthält.

2. Steuervorrichtung nach Anspruch 1, mittels der eine Höhe und/oder eine Neigung des Anbaugeräts (4) in Abhängigkeit der von der Sensoreinrichtung (6) erfassten Lageänderungsrate der Zugmaschine (1) einstellbar ist.

3. Steuervorrichtung nach Anspruch 1 oder 2, wobei die Drehrate eine Nick-Drehrate der Zugmaschine (1) um eine Querachse (8) der Zugmaschine (1) enthält.

**4.** Steuervorrichtung nach einem der Ansprüche 1 bis 4, wobei die Drehrate eine Roll-Drehrate der Zugmaschine (1) um eine Längsachse der Zugmaschine (1) enthält.

**5.** Steuervorrichtung nach einem der Ansprüche 2 bis 4, wobei die Neigung des Anbaugeräts (4) über eine Länge eines längenverstellbaren Oberlenkers (12) eines Hubwerks (2) der Zugmaschine (1), und/oder eine Verschwenkung eines Unterlenkers (14) und/oder eines Oberlenkers (12) eines Hubwerks (2) der Zugmaschine (1) einstellbar ist.

**6.** Steuervorrichtung nach einem der vorhergehenden Ansprüche, wobei mittels der Sensoreinrichtung (6) eine Neigung einer Längsachse der Zugmaschine (1) und/oder eine Neigung einer Querachse (8) der Zugmaschine (1) jeweils in Bezug auf den Untergrund (18) erfassbar ist.

**7.** Zugmaschine zum Ziehen mindestens eines Anbaugeräts (4) über einen Untergrund (18), **gekennzeichnet durch** eine Steuervorrichtung (7) nach einem der vorhergehenden Ansprüche.

**8.** Zugmaschine nach Anspruch 7, die ein von der Steuervorrichtung (7) steuerbares Hubwerk (2) mit einem, insbesondere längenverstellbaren und verschwenkbaren, Oberlenker (12) und mindestens einem, insbesondere verschwenkbaren, Unterlenker (14) aufweist, womit eine Höhe und/oder eine Neigung des Anbaugeräts (4) jeweils in Bezug auf den Untergrund (18) einstellbar ist.

**9.** Zugmaschine nach Anspruch 8, wobei eine Sensoreinrichtung (6) der Steuervorrichtung (7) etwa in Längsrichtung und/oder in Querrichtung der Zugmaschine (1) gesehen etwa in der Mitte der Zugmaschine (1) angeordnet ist.

**10.** Verfahren zum Steuern einer Zugmaschine, **gekennzeichnet durch**
Erfassen einer Lageänderungsrate der Zugmaschine (1), wobei die Lageänderungsrate eine Drehrate der Zugmaschine (1) enthält und die Sensoreinrichtung einen Trägheitssensor (6) für die Drehrate enthält, und
Einstellen einer Neigung und/oder einer Höhe mindestens eines von der Zugmaschine (1) über einen Untergrund (18) gezogenen Anbaugeräts (4) in Abhängigkeit der erfassten Lageänderungsrate.

**11.** Verfahren zum Steuern einer Zugmaschine nach Anspruch 10, das folgende Schritte aufweist:

Eingeben der erfassten Lageänderungsrate in eine lageänderungsratenbasierte Vorsteuerung (24) als Eingangsgröße (26),
Eingeben einer Sollposition der Neigung und/oder der Höhe des Anbaugeräts (4) und einer Istposition der Neigung und/oder der Höhe des Anbaugeräts (4) als Eingangsgrößen (30, 32) in einen Lageregler (28) für eine Lageregelung einer Neigung und/oder der Höhe des Anbaugeräts (4), und
Einstellen der Neigung und/oder der Höhe des Anbaugeräts (4) entsprechend der Ausgangsgrößen (34, 36) der lageänderungsratenbasierten Vorsteuerung (24) und des Lagereglers (28).

**Claims**

**1.** Control apparatus for a tractor (1) for pulling at least one attachment (4) over an area of ground (18), which control apparatus has a sensor device (6), **characterized in that** the control apparatus is designed to detect a rate of change in position of the tractor (1), which rate of change in position includes a rotation rate of the tractor (1), by means of the sensor device (6), and the sensor device contains an inertia sensor (6) for the rotation rate.

**2.** Control apparatus according to Claim 1, by means of which a height and/or an inclination of the attachment (4) can be adjusted depending on the rate of change in position of the tractor (1) detected by the sensor device (6).

**3.** Control apparatus according to Claim 1 or 2, wherein the rotation rate contains a pitch rotation rate of the tractor (1) about a transverse axis (8) of the tractor (1).

**4.** Control apparatus according to one of Claims 1 to 4, wherein the rotation rate includes a roll rotation rate of the tractor (1) about a longitudinal axis of the tractor (1).

**5.** Control apparatus according to one of Claims 2 to 4, wherein the inclination of the attachment (4) over a length of an adjustable-length top link (12) of a lifting mechanism (2) of the tractor (1) and/or pivoting of a bottom link (14) and/or of a top link (12) of a lifting mechanism (2) of the tractor (1) can be adjusted.

6. Control apparatus according to one of the preceding claims, wherein an inclination of a longitudinal axis of the tractor (1) and/or an inclination of a transverse axis (8) of the tractor (1), in each case with respect to the ground (18), can be detected by means of the sensor device (6).

7. Tractor for pulling at least one attachment (4) over an area of ground (18), **characterized by** a control apparatus (7) according to one of the preceding claims.

8. Tractor according to Claim 7, which has a lifting mechanism (2) which can be controlled by the control apparatus (7) and has an, in particular adjustable-length and pivotable, top link (12) and at least one, in particular pivotable, bottom link (14), by way of which a height and/or an inclination of the attachment (4), in each case with respect to the ground (18), can be adjusted.

9. Tractor according to Claim 8, wherein a sensor device (6) of the control apparatus (7) is arranged approximately in the middle of the tractor (1) as seen approximately in the longitudinal direction and/or in the transverse direction of the tractor (1).

10. Method for controlling a tractor, **characterized by**
detecting a rate of change in position of the tractor (1), wherein the rate of change in position includes a rotation rate of the tractor (1) and the sensor device contains an inertia sensor (6) for the rotation rate, and
adjusting an inclination and/or a height of at least one attachment (4) which is pulled over an area of ground (18) by the tractor (1), depending on the detected rate of change in position.

11. Method for controlling a tractor according to Claim 10, which comprises the following steps:

inputting the detected rate of change in position as an input variable (26) into a pilot control arrangement (24) which is based on a rate of change in position,
inputting a setpoint position for the inclination and/or the height of the attachment (4) and an actual position of the inclination and/or of the height of the attachment (4) as input variables (30, 32) into a position controller (28) for controlling a position of an inclination and/or the height of the attachment (4), and
adjusting the inclination and/or the height of the attachment (4) in accordance with the output variables (34, 36) of the pilot control arrangement (24), which is based on the rate of change in position, and of the position controller (28).

**Revendications**

1. Dispositif de commande pour un véhicule tracteur (1) destiné à tracter au moins un outil porté (4) au-dessus d'un sol (18), comprenant un dispositif de détection (6), **caractérisé en ce que** le dispositif de commande est aménagé pour détecter au moyen du dispositif de détection (6) un taux de changement de position du véhicule tracteur (1) comprenant un taux de rotation du véhicule tracteur (1), et le dispositif de détection comprend un capteur d'inertie (6) pour le taux de rotation.

2. Dispositif de commande selon la revendication 1, permettant de régler une hauteur et/ou une inclinaison de l'outil porté (4) en fonction du taux de changement de position du véhicule tracteur (1), détecté par le dispositif de détection (6).

3. Dispositif de commande selon la revendication 1 ou 2, dans lequel le taux de rotation comprend un taux de rotation en tangage du véhicule tracteur (1) autour d'un axe transversal (8) du véhicule tracteur (1).

4. Dispositif de commande selon l'une quelconque des revendications 1 à 4, dans lequel le taux de rotation comprend un taux de rotation en roulis du véhicule tracteur (1) autour d'un axe longitudinal du véhicule tracteur (1).

5. Dispositif de commande selon l'une quelconque des revendications 2 à 4, dans lequel l'inclinaison de l'outil porté (4) est réglable sur une longueur d'une bielle supérieure (12) réglable en longueur d'un dispositif de levage (2) du véhicule tracteur (1), et/ou un pivotement d'une bielle inférieure (14) et/ou d'une bielle supérieure (12) d'un dispositif de levage (2) du véhicule tracteur (1) est réglable.

6. Dispositif de commande selon l'une quelconque des revendications précédentes, dans lequel le dispositif de détection (6) permet de détecter une inclinaison d'un axe longitudinal du véhicule tracteur (1) et/ou une inclinaison d'un axe transversal (8) du véhicule tracteur (1) respectivement par rapport au sol (18).

7. Véhicule tracteur destiné à tracter au moins un outil porté (4) au-dessus d'un sol (18), **caractérisé par** un dispositif de commande (7) selon l'une quelconque des revendications précédentes.

8. Véhicule tracteur selon la revendication 7, présentant un dispositif de levage (2) pouvant être commandé par le dispositif de commande (7) et doté d'une bielle supérieure (12) en particulier réglable en longueur et pivotante, et d'au moins une bielle inférieure (14), en particulier pivotante, qui permettent de régler une hauteur et/ou une inclinaison de l'outil porté (4) respectivement par rapport au sol (18).

9. Véhicule tracteur selon la revendication 8, dans lequel un dispositif de détection (6) du dispositif de commande (7) est disposé approximativement au centre du véhicule tracteur (1), vu dans la direction longitudinale et/ou dans la direction transversale du véhicule tracteur (1).

10. Procédé de commande d'un véhicule tracteur, **caractérisé par** les étapes consistant à
détecter un taux de changement de position du véhicule tracteur (1), le taux de changement de position comprenant un taux de rotation du véhicule tracteur (1) et le dispositif de détection comprenant un capteur d'inertie (6) pour le taux de rotation, et
régler une inclinaison et/ou une hauteur d'au moins un outil porté (4) tracté par le véhicule tracteur (1) au-dessus d'un sol (18) en fonction du taux de changement de position détecté.

11. Procédé de commande d'un véhicule tracteur selon la revendication 10, comprenant les étapes suivantes consistant à :

entrer le taux de changement de position détecté dans une commande pilote basée sur un taux de changement de position (24) comme une grandeur d'entrée (26),
entrer une position théorique de l'inclinaison et/ou de la hauteur de l'outil porté (4) et une position réelle de l'inclinaison et/ou de la hauteur de l'outil porté (4) comme des grandeurs d'entrée (30, 32) dans un contrôleur de position (28) pour un contrôle de position d'une inclinaison et/ou de la hauteur de l'outil porté (4), et
régler l'inclinaison et/ou la hauteur de l'outil porté (4) selon les grandeurs de sortie (34, 36) de la commande pilote basée sur le taux de changement de position (24) et du contrôleur de position (28).

**Fig. 1**

**Fig. 2**

## Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10140383 A1
- DE 1557862
- EP 3146822 A1
- DE 1237831
- JP H09224409 A
- DE 3501568 A1